Europäisches Patentamt

(19) European Patent Office

Office européen des brevets

(11) Publication number: **0 012 016**
A1

## (12) EUROPEAN PATENT APPLICATION

(21) Application number: **79302726.9**

(22) Date of filing: **29.11.79**

(51) Int. Cl.³: **G 06 F 13/00**
**G 06 F 15/16**

(30) Priority: **30.11.78 US 964995**

(43) Date of publication of application:
**11.06.80 Bulletin 80/12**

(84) Designated Contracting States:
**DE FR GB IT**

(71) Applicant: **SPERRY CORPORATION**
**1290 Avenue of the Americas**
**New York, N.Y. 10019(US)**

(72) Inventor: **Krocheski, Thomas Lee**
**11701 Galtier Drive**
**Burnsville, Minnesota 55337(US)**

(72) Inventor: **Thorsrud, Lee Thomas**
**1146 Palace Avenue**
**St. Paul, Minnesota 55105(US)**

(74) Representative: **Michaels, Peter Albert**
**SPERRY UNIVAC Patent & Licensing Services M.S. S2**
**W1 SPERRY UNIVAC CENTRE**
**London NW10 8LS(GB)**

(54) **Memory access control.**

㊺ A multiported memory module (11) permits memory access by a plurality of requestors (10) via requestor ports (13a, 13b; 16a, 16b) and has a priority circuit 100 for determining priority of access requests. A status register (21) within the memory module (11) stores lock-out values to control the communication between the memory module (11) and the requestors (10). The status register (21) may be written into or read from by the requestors (10). Each bit position (305 to 312) of the status register (211) is dedicated to a corresponding requestor port (13a, 13b; 16a 16b). If a bit position represented by a flip-flop (305 to 312) contains a binary zero, the corresponding requestor port (13a, 13b; 16a, 16b) operates normally, but if it contains a binary one, disabled gating means (411 to 418) prevent the memory module (11) from honouring an access requests via the corresponding requestor port. Thus one or more of the requestors (10) may be locked out in response to software instructions.

./...

Croydon Printing Company Ltd.

FIG.1

-1-

Memory Access Control

The invention relates to memory access controls in data processing systems.

Medium and large scale data processing systems now usually include facilities for adding or deleting memory capacity by adding or deleting memory modules. Quite often, each memory module has a multiple user interface which gives access to the memory module to several requestors such as processing units, input/output units, etc., through their associated requestor ports within the multiple user interface. The memory module usually honours requests by the requestors for access to specific addressable locations in accordance with an internal priority scheme. Different requestors may communicate with one another through data stored within the memory module by using pre-defined protocols, or they may simply share the capacity of the memory module in some pre-defined manner without direct communication. In either case, the usefulness of the memory module to one requestor is partly dependent on the adherence by other requestors to the pre-determined protocol or the pre-defined manner of sharing the memory module. Should a requestor not adhere to these predefined procedures, for example because of malfunction, the usefulness of the memory module to the remaining requestors may be jeopardised by the possible undefined accesses to the memory module by that requestor.

Thus, the problem is how to prevent such a requestor from accessing the memory module, so that the integrity of the data stored in the memory module is preserved.

This problem has heretofore been solved by manual intervention such as powering that requestor down or breaking the electrical connection between the requestor concerned and the corresponding requestor port. Both these methods tend to be inconvenient and time consuming. Moreover, the physical size of the necessary manual switches may be incompatible with stringent packaging requirements.

The approach of the present invention involves providing a software controllable way of denying a requestor access to the memory module. Gating means are provided, which can be selectively enabled or disabled in response to software instructions, according to whether or not memory access by the requestor concerned is permissible.

The present invention thus solves the above stated problem in a way which not only generates small space and power requirements, but provides increased flexibility and facilitates rapid response to changing operating conditions. It moreover lends itself to applications in which a data processing system is unattended.

The invention will now be described further by way of example only. For a better understanding of the embodiment which is described in detail below with reference to the drawings, the organisation of that embodiment will first be briefly outlined.

The memory module includes a status register, which can be accessed (i.e., read from and written into) by using a pre-defined address, as if it were one of the addressable locations of the memory module. In this way, a requestor (for instance a central processing unit) may modify the contents of the status register by executing specific software instructions. The embodiment also includes a manual mode switch on the memory module which permits selection of either normal mode or maintenance mode, the status register being addressable only when the memory module is in the maintenance mode.

A bit position of the status register is dedicated to each requestor port of the memory module. If a bit position so dedicated contains a binary zero, the corresponding requestor ports operates normally. If a bit position so dedicated contains a binary one, gates for the corresponding requestor port will be disabled and access to the memory module will not be permitted via that requestor port, with the result that the associated requestor is locked out. Requestors may thus be locked out under software control, in this case when the memory module is in the maintenance mode. This software controlled requestor lock-out may be rapidly accomplished without further manual intervention in response to malfunctions, configuration changes, and operating mode changes.

For the detailed further description of the embodiment, reference will now be made to the drawings, of which:-

Figure 1 is a simplified block diagram of a memory module incorporating the present invention.

Figure 2 shows details of the interface logic of Figure 1.

Figure 3 shows details of the mode change circuitry of Figure 1.

Figure 4 shows details of the status register circuits of Figure 1.

Figure 5 shows details of the priority circuitry of Figure 2; and

Figure 6 illustrates the relative timings of various signals occurring in operation of the circuits of Figures 2 to 5.

The invention will be described as applied to an AN/UYK-7(V) computer set. The AN/UYK-7(V) computer set is a standard piece of military hardware currently in the inventory of the United States Department of Defence. Circuit diagrams, the technical description, and the parts list for AN/UYK-7(V) computers, designated NAVSEA 0967-LP-319-4030 and NAVSEA 096-LP-319-4040, NAVSEA 0967-LP319-4010, and NAVSEA 0967-LP-319-4020 respectively, are published by the Naval Sea Systems Command in Washington, D.C.

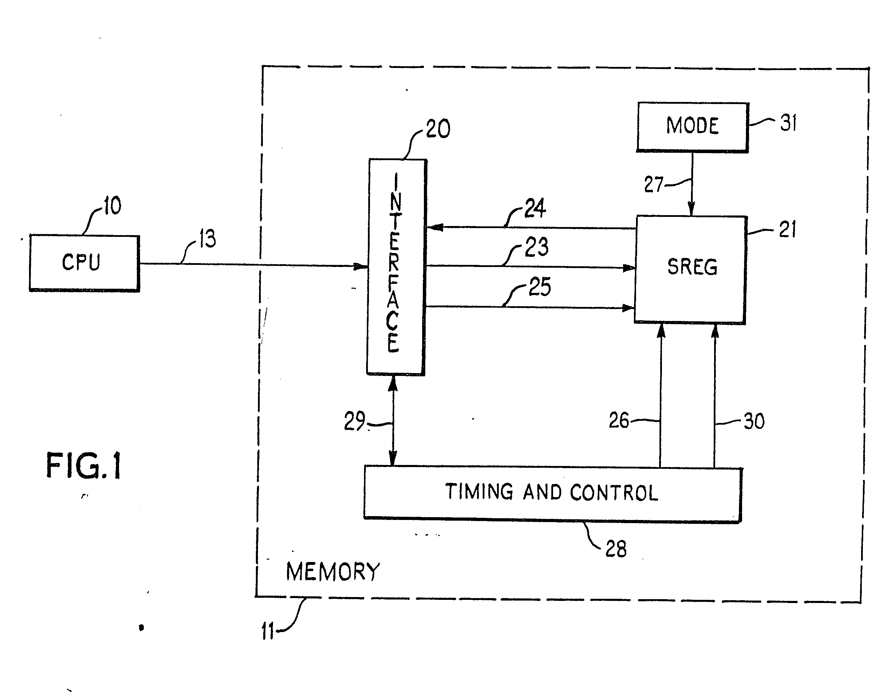

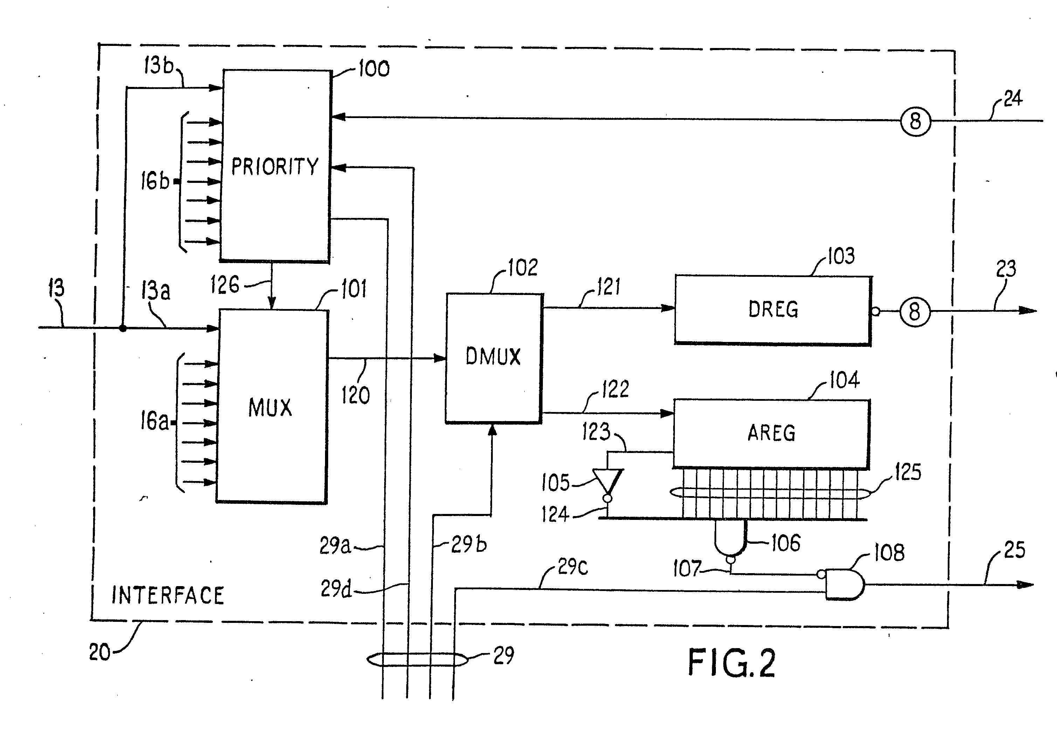

Figure 1 shows a memory module 11 which incorporates the present invention, and a Central Processing Unit, CPU 10, which is programmable through the execution of a series of software instructions. The CPU 10 is shown as interfacing the memory 11 via line 13. The interface of the memory 11 is, in reality, quite complex, but for reasons of clarity, details not necessary for the understanding of the present invention have been omitted. Further details not directly concerned with the present invention may be found in NAVSEA 0967-LP-319-403. Also, only one requestor (i.e., CPU 10) is shown although the memory 11 has eight requestor ports and thus may have up to eight requestors. (See Figure 2, and NAVSEA 0967-LP-3194030).

The interface 20 interfaces directly with CPU 10 via line 13 and handles the protocol. The interface 20 not only transfers data to the status register, SREG 21, via lines 23 and 25 as shown, but also transfers data to and from the memory arrays which, for the sake of clarity, are not shown here. The timing and control circuits 28 are notified of an access request by the interface 20 via line 29; and control the operation of the interface 20 via line 29, and the status register SREG 21 via lines 26 and 30. Again for clarity, only those interconnections are shown which are required to control writing into SREG 21. Not shown are the circuits required for reading from SREG 21 and for reading from and writing into the memory arrays. A manually operable mode change circuit, MODE 31, indicates mode changes to SREG 21 via line 27. The contents of the programmable requestor lock-out bit positions in SREG 21 are transmitted to the interface 20 via line 24. Line 26 permits the timing and control circuits 28 to set selected requestor lock-out bit positions in SREG 21 to contain binary ones, to achieve lock-out of selected requestors based upon considerations immaterial for the present discussion (i.e., other than software).

Figure 2 shows the organisation of the interface 20. Line 13, received from CPU 10, contains two components. Line 13a transfers data to the multiplexer, MUX 101, and line 13b transfers request control signals to a priority circuit (PRIORITY) 100. Lines 16a represent data transfer lines from seven other requestors, and lines 16b represent request control lines from those other requestors. MUX 101 is required to select data from one of the eight possible requestor ports (See NAVSEA 0967-LP-319-4030). The priority circuit 100 determines when any one of the eight requestors will be granted access to the memory 11. The priority circuit 100 notifies MUX 101 via line 126 to select data from one of the eight requestor ports. The priority circuit 100 notifies the timing and control circuits 28 via line 29a when an access request is to be processed. MUX 101 then selects data from the requestor port specified by the priority circuit 100 via line 126, and transfers the data to the demultiplexer DMUX 102, via line 120. DMUX 102 routes the data either via line 121 to a data register DREG 103, or via line 122 to an address register AREG 104, based upon a command received via line 29b from the timing and control circuits 28.

In the embodiment described here, an address word requires 15 bits (actually, the memory 11 contains $2^{16}$ addressable locations, the ambiguity being resolved by request control lines which are not shown) and a data word comprises 8, 16 or 32 bits. Therefore, DMUX 102 either routes a 15 bit address word, received via line 120 from MUX 101, to AREG 104 via line 122 or routes an 8, 16 or 32 bit data word, received via line 120 from MUX 101, to DREG 103 via line 121. The selection is accomplished by DMUX 102 in response to a command from the timing and control circuits 28 received via line 29b. AREG 104 is a 15 bit register which holds the 15 bit address word received from DMUX 102 via line 122. AREG 104 is normally used to address the memory arrays of MEMORY 11 (via circuitry which is not shown), and is used also to access SREG 21 through the circuitry which is shown. SREG 21 is accessed as address $77776_8$, but only if the memory 11 is in the maintenance mode. Therefore, to select access to SREG 21, AREG 104 must have a binary zero in bit position $2^0$, and the remaining 14 bit positions (i.e., $2^1$, $2^2$, $2^3$, ....., $2^{14}$) must contain binary ones. This provides the required address of $77776_8$.

The content of bit position $2^0$ of AREG 104 is transferred via line 123 (which is low if bit position $2^0$ has a 0, and high if bit position $2^0$ has a 1) to an inverter 105. The output of the inverter 105 is transferred to an AND gate 106 via line 124. The contents of the remaining bit positions (i.e., $2^1$ to $2^{14}$) are transferred via lines 125 to an AND gate 106. If and only if bit position $2^0$ contains a binary zero and the remaining bit positions contain binary ones (i.e., if AREG 104 contains the address word $77776_8$), does the AND gate 106 make line 107 low, the line 107 being high if AREG 104 contains any other address word. An AND gate 108 makes line 25 high if and only if the line 29c is high and the line 107 is low. The line 29c carries a timing signal received from the timing and control circuits 28.

As stated above, DREG 103 receives an 8, 16 or 32 bit data word from DMUX 102 via line 121. DREG 103 has several outputs, only one of which relates to the present invention and is shown as line 23. Line 23 contains eight conductors corresponding to the eight bit positions of DREG 103. The contents of these bit positions are transferred to SREG 21 as the bit positions dedicated to programmable requestor lock-outs. In the present embodiment they are bit positions $2^0$, $2^1$, $2^2$, $2^3$, $2^4$, $2^5$, $2^6$ and $2^7$. If a bit position contains a binary zero, the corresponding conductor of line 23 is high, and if it contains a binary one the conductor is low.

The contents of the eight bit positions of SREG 21 dedicated to programmable requestor lock-out are transferred through lines 24a to 24h to the priority circuit 100. The function of the lines 24a to 24h will be discussed in detail below. Line 29d transfers a CLEAR REQUEST signal, the function of which will be discussed later, from the timing and control circuits 28 to the priority circuit 100.

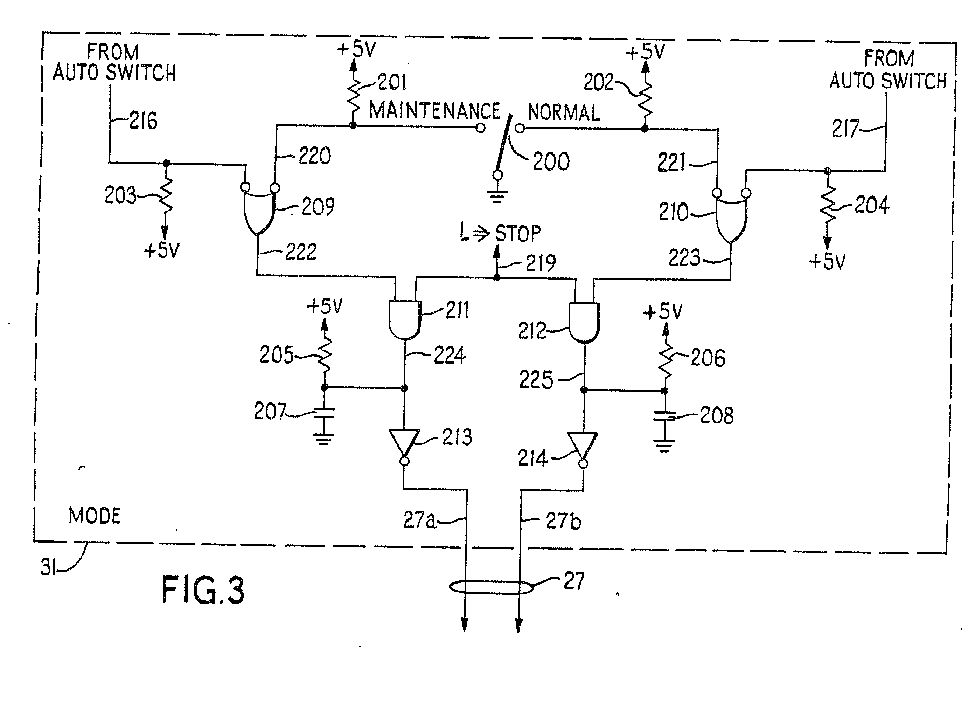

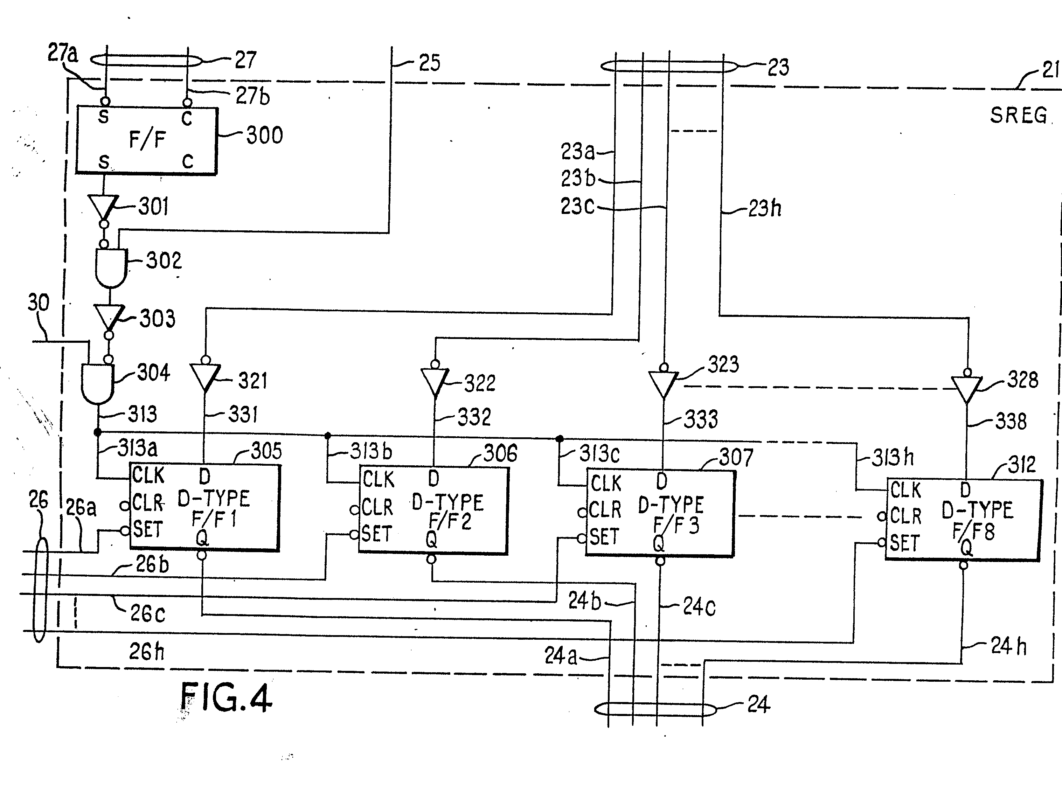

A circuit diagram of the manual mode change circuit, MODE 31, is shown in Figure 3. An operator enters a mode change by means of a single pole-double throw (SPDT) switch 200. SPDT switch 200 is a momentary contact switch to provide some noise immunity. The use of a momentary contact switch is permissible because a flip-flop 300 (Figure 4) stores the most recent switch position. Upon being switched to "MAINTENANCE" mode, SPDT switch 200 momentarily couples line 220 to ground. The resulting low on line 220 causes NOR gate 209 to make line 222 high. Assuming line 219 is also high (i.e., no low (L) stop signal (STOP) is present), AND gate 211 allows line 224 to be high. Inverter 213 inverts the high and applies a low to line 27a. The "MAINTENANCE" mode may also be entered via automatic means at line 216, details of which are not disclosed here because they are immaterial to the discussion of the present invention. Resistors 201, 203 and 205 are "pull-up" resistors with a value of 1,000 ohms. They are used to source current to the various lines (i.e., line 220, line 216 and line 224, respectively) in order to provide desirable rise-times on transitions to high. Capacitor 207 decouples high frequency switching transients. The STOP signal to line 219 prevents mode change during primary power transients.

A change-over to "NORMAL" mode is accomplished by the SPDT switch 200 being placed into the "NORMAL" position. The resulting signal is propagated, in a similar way to above, through NAND gate 210, AND gate 212 and inverter 214. Pull-up resistors 202, 204 and 206 are again 1,000 ohms. A switch to the "NORMAL" mode results in inverter 214 applying a low to line 27b.

Figure 4 shows the organisation of status register SREG 21. Only the eight bit positions (i.e., bit positions $2^0$, $2^1$, $2^2$, $2^3$, $2^4$, $2^5$, $2^6$ and $2^7$) for the programmable requestor lock-outs are illustrated for clarity. The remaining bit positions of SREG 21 provide functions not relevant to the present invention. Line 27a and line 27b carry the mode change signals (i.e., "MAINTENANCE" mode when line 27a goes low; "NORMAL" mode when line 27b goes low) received from MODE 31. Flip-flop 300 stores the current mode, the flip-flop 300 being set for "MAINTENANCE" mode, and being clear for the "NORMAL" mode. If the flip-flop 300 is set, its set output S is high. If the flip-flop 300 is clear the output S is low. The output level of the flip-flop 300 is inverted in an inverter 301 and applied to a gate 302. The output of the gate 302 is high if the flip-flop 300 is set (i.e., when it stores "MAINTENANCE" mode), and line 25 is high if AREG 104 contains the address word $77776_8$ (Figure 2). The output of the gate 302 is inverted by the inverter 303 and applied as an input to a gate 304. During the time when the line 30 from the timing and control circuits 28 is high, and the output of the inverter 303 is low due to the output of the gate 302 being high, the output of gate 304 is high. This high output is transferred via line 313 to the clock inputs CLK of the eight flip-flops 305 to 312. These flip-flops are data flip-flops of the edge-triggered D-type. As explained earlier, each of the eight conductors 23a to 23h of line 23 is high if the corresponding bit position (i.e., $2^0$ to $2^7$) of DREG 103 contains a binary zero, and is low if the corresponding bit position of DREG 103 contains a binary one.

The D-type flip-flops 305 to 312 are conveniently common monolithic devices, such as industrial standard part 54LS74 used in the present implementation. Further explanation of the D-type flip-flops will be found in many basic electronics text books such as: Leonard Strauss, "wave Generation and Shaping" (McGraw-Hill, 1970) at page 569 - 572. Each of the eight D-type flip-flops 305 to 312 is set (i.e., contains a binary one) at the coincidence of a high input at the clock input CLK received via line 313 (i.e., lines 313a to 313h) and a high input at its D-input, received from the corresponding one of eight inverters 321 to 328. For example, D-type flip-flop 305 sets if line 313a goes high and line 331 is high. Similarly, D-type flip-flop 306 sets if line 313b goes high and line 332 is high, etc. Each of the eight D-type flip-flops clears (i.e., contains a binary zero) at the coincidence of a high input at CLK received via line 313 and a low input at the D-input received from the corresponding one of the eight inverters 321 to 328. For example, D-type flip-flop 305 clears if line 313a goes high and line 331 is low. Similarly, D-type flip-flop 306 sets if line 313b goes high and line 332 is low, etc.

A second means of setting and clearing each of the D-type flip-flops 305 to 312 is available as each D-type flip-flop has a set input SET and a clear input CLR. A low applied to the SET input of any one the eight D-type flip-flops 305 to 312 will set that particular D-type flip-flop. A low applied to the CLR input will clear that particular D-type flip-flop. For clarity, the connections to the CLR inputs are not shown. However, in the present embodiment, the CLR input of each of the D-type flip-flops 305 to 312 is connected to a memory module master clear line which ensures that each D-type flip-flop is cleared upon power up. A separate one of the eight conductors of line 26 (i.e., lines 26a to 26h) is connected to the SET input of the corresponding D-type flip-flop. For example, line 26a is connected to the SET input of the D-type flip-flop 305, and so forth. The eight conductors of line 26 (i.e., lines 26a to 26h) are connected to the timing and control circuits 28 (see also Figure 1). Line 26 permits the timing and control circuits 28 to set any of the eight D-type flip-flops to lock out any of the eight requestor ports on the basis of considerations not relevant to the present invention.

The content of each of the eight D-type flip-flops 305 to 312 is taken from its Q output, which is connected to a respective one of the eight conductors 24a to 24h of the line 24. For example, the Q output of D-type flip-flop 305 is connected to line 24a, the Q output of D-type flip-flop 306 is connected to line 24b, etc. The output actually used in each case is an inverted output. Therefore, if a D-type flip-flop is clear, the corresponding conductor of line 24 is high, if it is set, the corresponding conductor of line 24 is low.

Figure ·5 shows the details of the priority circuit 100 which performs the actual lock-out of requestors. The request control lines are received from the afore-mentioned eight requestors by control line receivers 400, the request control lines being shown on the drawing as a line 13b and seven lines labelled 16b. The control line receivers 400 perform a level conversion and stabilise request signals (see NAVSEA 0967-LP-319-4030 for details of request signal generation circuitry) received on line 13b and the seven lines labelled 16b. (Typical circuitry used for this conversion and stabilising may also be reviewed in NAVSEA 0967-LP-319-4030). The converted and stabilised output signals from control line receivers 400 appear on lines 431 to 438, each of the lines containing the request signals from a different one of the possible eight requestors.

The stabilised request signal for each of the eight requestors is stored within a corresponding different one of the eight JK flip-flops 421 to 428. The JK flip-flops used are common monolithic devices, such as standard part 54S112. The set input SET, and the J-state input J, of each JK flip-flop are wired via line 420 through a pull-up resistor (value 1,000 ohms) to the positive five volt supply, creating a high at the SET input and the J input of each JK flip-flop. The K-state input K of each JK flip-flop is grounded, creating a low. Therefore, each JK flip-flop is set (caused to contain a binary one) through the imposition of a low at its clock input CLK, and is cleared (caused to contain a binary zero) through the imposition of a low at its clear input CLR. The Q outputs of each JK flip-flop provide a high if the JK flip-flop is set, and a low if the JK flip-flop is clear. A complementary output is also provided. Both the Q and complement Q outputs of each JK flip-flop are coupled to an evaluation circuit, EVALUATION, 410 which determines on the basis of an internal priority algorithm, which request to honour and when to honour it. A code, representing which one of the eight requests is to be honoured, is transferred to MUX 101 via line 126. The timing of the request is transferred to the timing and control circuits 28 via line 29a.

As implied above, the converted and stabilised request signal, for access to the memory 11 from any requestor (represented as a high on one of the eight lines 431 to 438) must set the corresponding one of the eight JK flip-flops 421 to 428 to cause that request to be transferred to the evaluation circuit 410 via the Q, and the complementary Q, outputs of the JK flip-flop concerned, so as to be ultimately honoured. To set one of the JK flip-flops requires a low to be present at its clock input CLK, received from the corresponding input NAND gate (i.e., NAND 411 to NAND 418). An input NAND gate will output a low only if both of its inputs are high. For example, to set JK flip-flop 421 requires the converted and stabilised request signal (i.e., high) for the corresponding requestor to be present at line 431, and line 441 to be high. Similarly, to set JK flip-flop 422 requires the converted and stabilised (i.e., high) from the corresponding requestor to be present at line 432 and line 442 to be high. The remaining JK flip-flops are set in the same manner.

OR gates 401 to 407 determine whether the corresponding lines 441 to 447 will be high. For example, the line 441 will be high only if both the line 24a and the line 430 are high; similarly, the line 442 will be high only if both the line 24b and the line 430 are high, etc. The line 430 contains an initialize signal inverted by an inverter 429. During the initialize process, requests cannot be honoured, so a high initialize signal (H ≥ INITIALIZE) is present and the inverter 429 makes line 430 low. Therefore, during the initialize process, lines 441 to 448 are all low and the JK flip-flops cannot be set, regardless of whether any request signals are present.

At any other time, when the INITIALIZE signal is absent (i.e., low) the state of the lines 441 to 448 are determined by the state of the lines 24a to 24h. For instance, if the INITIALIZE signal is absent and the line 24a is low, then line 441 is low. If the INITIALIZE signal is absent and the line 24a is high, then the line 441 is high. As indicated above, lines 24a to 24h carry the complement outputs of the D-type flip-flops 305 to 312 which store the programmable requestor lock-outs. Therefore, if a programmable requestor lock-out is set, the corresponding JK flip-flop is prevented from being set. For example, if D-type flip-flop 305 is set, then the line 24a is low and consequently the line 441 is low, and therefore NAND 411 makes the clock input CLK of the flip-flop JK 421 high regardless of whether or not a request signal (i.e., high) is present on line 431. Similarly, if D-type flip-flop 306 is set, then the line 24b is low and consequently line 442 is low, and NAND 412 makes the clock input CLK of the JK flip-flop 422 high regardless of whether or not a request signal (i.e., high) is present on line 432. The other programmable requestor lock-outs operate on the same lines.

If line 419 is low, then all eight JK flip-flops 421 to 428 are cleared. This occurs if line 29d is high causing an inverter 409 to make line 419 low. The timing and control circuits 28 cause line 29d to go high at the end of each access cycle of the memory 11. Clearing all eight JK flip-flops 421 to 428 in this manner permits a requestor to abort an access request which has not yet been honoured by the memory 11. Further details of aborting an access request by a requestor, which are immaterial to the discussion of the present invention, will be found in the above-mentioned references describing the AN/UYK-7(V) computer set. The logic devices of the embodiment described here are all commonly used low power Schottky devices.

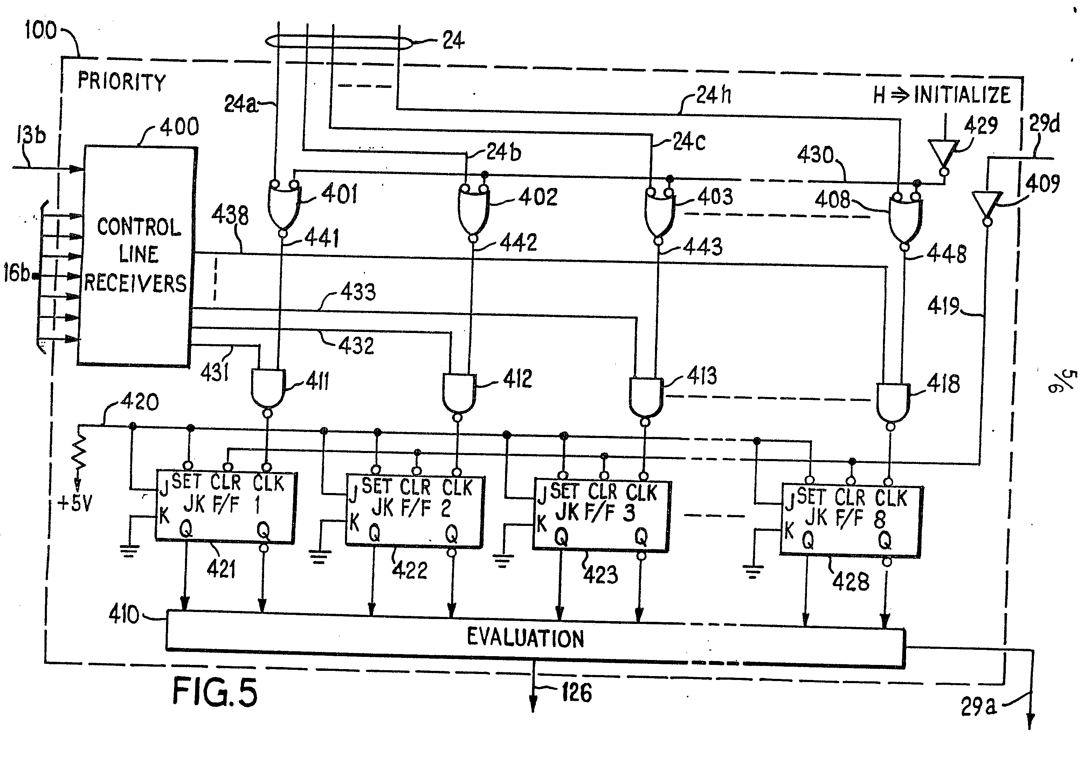

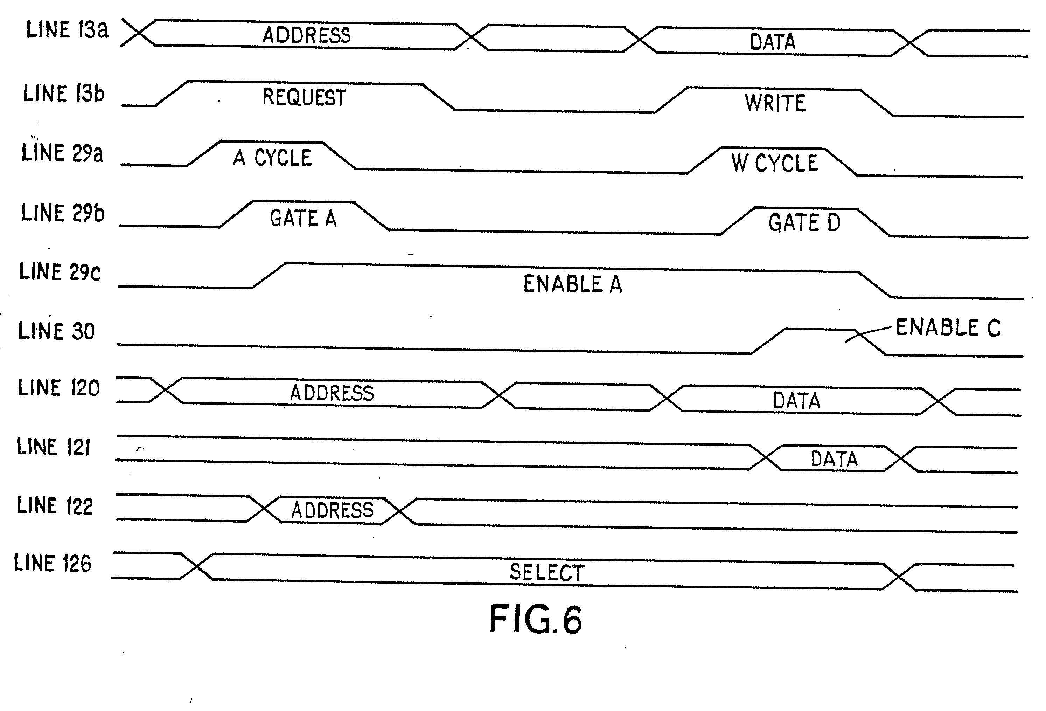

Figure 6 shows the relative timing of the key signals necessary to set one or more of the bit positions $2^0$ to $2^7$ of the status register SREG 21 to a binary one, causing programmable requestor lockout of the corresponding one or more of the eight possible requestors. LINE 13a contains the data transferred from CPU 10 as a 15 bit address word and an 8, 16 or 32 bit data word. LINE 13b shows the presence of the access request and the write command. LINE 29a indicates timing of the address word cycle, A CYCLE, and the data word cycle, W CYCLE; LINE 29b shows gating signals GATE A and GATE D which are supplied by the timing and control circuits 28 to DMUX 102 via the line 29b (Figure 2) to gate the address word to AREG 104 (GATE A) and to gate the data word to DREG 103 (GATE D). The timing and control circuits 28 transfers the signal ENABLE A, on LINE 29c, to gate the address determination result (i.e., whether or not AREG 104 contains the address $77776_8$) on to the line 25 (Figure 2). LINE 120, LINE 121 and LINE 122 show the address word and the data word conducted on lines 120, 121 and 122 of Figure 2. The priority circuit 100 notifies the multiplexer MUX 101 which of the possible eight interfaces is to be selected via line 126 (Figure 2 and 5) by the signal shown on LINE 126 of Figure 6.

CLAIMS

1.      A data processing system including a memory (11) accessible to a plurality of requestors (10) via respective requestor ports, characterised in that for each requestor port (13a, 13b;  16a, 16b) associated gating means (411 to 418) are provided the selective disabling of which, by a lock-out circuit (21) responsive to software instructions executed by a requestor (10), causes those requestors (10) to be locked out whose requestor ports (13a, 13b);  16a, 16b) are associated with the disabled gating means (13a, 13b;  16a, 16b).

2.      A data processing system according to claim 1 characterised in that the lock-out circuit comprises a requestor-addressable status register (21) having storage locations (305 to 312) corresponding to each of the gating means (411 to 418), the contents of the storage locations (305 to 312) being alterable in response to said software instructions and representing a lock-out value for each of said gating means (411 to 418), with the output of each storage location (305 to 312) providing an enabling or disabling signal for the corresponding gating means (411 to 418) according to its contents.

3.      A data processing system according to claim 2 characterised in that each of said storage locations (305 to 312) comprises a flip-flop storing one of two binary lock-out values, each flip-flop (305 to 312) being arranged to receive and store, in response to said software instructions, a separate one of the binary positions of a data word.

4.      A data processing system according to claims 2 or 3, characterised in that the memory (11) includes mode switching means (31) arranged to permit switching between a mode in which the status register (21) is addressable by a requestor (10) and a mode in which the status register (21) cannot be addressed by a requestor (10).

5.    A data processing system according to any preceding claim, characterised in that each requestor port (13a, 13b;  16a, 16b) comprises a data port (13a, 16a), and an access request port (13b, 16b) leading to a priority circuit (100) which determines priority between access requests from different requestors (10) by means of a priority evaluating circuit (421 to 428, and 410) and causes selection of data at the data ports (13a; 16a) accordingly, and in that the gating means (411 to 418) are interposed between the access request ports (13b; 16b) and the priority evaluating circuit (421 to 428;  410) such that access requests from requestors (10) associated with disabled gating means (411 to 418) are prevented from being received by the priority evaluation circuit (421 to 428).

6.    A data processing system according. to any preceding claim, characterised in that the memory comprises one or more memory modules (11), each having an interface (20) containing the requestor ports (13a, 13b; 16a, 16b).

7.    A data processing system according to claim 6, characterised in that the lock-out circuit (21) and the gating means (411 to 418) are contained within their respective memory modules (11).

FIG.1

FIG.2

FIG.3

FIG.4

FIG.5

FIG.6

| | **DOCUMENTS CONSIDERED TO BE RELEVANT** | | CLASSIFICATION OF THE APPLICATION (Int. Cl. ³) |
|---|---|---|---|
| Category | Citation of document with indication, where appropriate, of relevant passages | Relevant to claim | |
| X | US - A - 3 905 023 (PERPIGLIA)<br><br>* From column 45, line 51 to column 46, line 17; from column 46, line 65 to column 47, line 31; from column 48, line 62 to column 49, line 9; column 51, lines 15-52; from column 52, line 54 to column 53, line 2; and figures 29-33 * | 1-7 | G 06 F 13/00<br>15/16 |
| | -- | | TECHNICAL FIELDS SEARCHED (Int.Cl. ³) |
| | US - A - 3 986 169 (KOBAYASHI)<br><br>* Column 5, lines 31-65; figure 6 * | 1,2 | G 06 F 13/00 |
| | -- | | |
| | IBM TECHNICAL DISCLOSURE BULLETIN, vol. 8, no. 10, March 1966, pages 1322-1323.<br>New York US<br>WALKER: "I/O Device Reservation",<br><br>* Page 1323, last paragraph * | 1,2,6, 7 | |
| | -- | | |
| | FR - A - 2 332 571 (LABORATOIRE CENTRAL DE TELECOMMUNICATIONS)<br><br>* From page 4, line 24 to page 5, line 30 * | | CATEGORY OF CITED DOCUMENTS |
| | ---- | | X: particularly relevant<br>A: technological background<br>O: non-written disclosure<br>P: intermediate document<br>T: theory or principle underlying the invention<br>E: conflicting application<br>D: document cited in the application<br>L: citation for other reasons |
| | | | &: member of the same patent family, corresponding document |

The present search report has been drawn up for all claims

| Place of search | Date of completion of the search | Examiner |
|---|---|---|
| The Hague | 19-02-1980 | WEBER R. |

EPO Form 1503.1  06.78